# EUROPÄISCHE PATENTSCHRIFT

(11) **EP 0 984 260 B1**
(45) Veröffentlichungstag und Bekanntmachung des Hinweises auf die Patenterteilung: **19.06.2002**
(21) Anmeldenummer: 99890273.8
(22) Anmeldetag: 26.08.1999
(51) Int. Cl.: G01M 17/007, B60K 28/02, B60K 28/10

(54) **Verfahren zur Analyse und zur Beeinflussung des Fahrverhaltens von Kraftfahrzeugen**
Method for analysing and influencing the conduit behaviour of vehicles
Méthode pour analyser et influencer le comportement de conduite des véhicules

(30) Priorität: 01.09.1998 AT 57498 U
(43) Veröffentlichungstag der Anmeldung: 08.03.2000
(73) Patentinhaber: AVL List GmbH, 8020 Graz (AT)
(72) Erfinder: List, Helmut, Prof. Dipl.-Ing, 8010 Graz (AT); Schöggl, Peter, Dipl.-Ing Dr., 8054 Seiersberg (AT)
(74) Vertreter: Babeluk, Michael, Dipl.-Ing. Mag.

(56) Entgegenhaltungen:
- EP-A- 0 304 089
- EP-A- 0 846 945
- DE-A- 19 524 914
- DE-A- 19 630 970
- DE-A- 19 720 626
- US-A- 5 189 619
- US-A- 5 313 388
- US-A- 5 802 545

## Beschreibung

Die vorliegende Erfindung betrifft ein Verfahren zur Analyse und zur Beeinflussung des Fahrverhaltens von Kraftfahrzeugen.

Ein wesentliches Kriterium bei der subjektiven Beurteilung eines Kraftfahrzeugs durch den Fahrer oder durch Passagiere ist die sogenannte Fahrbarkeit oder Driveability. Allgemein wird unter Driveability eine subjektive Empfindung von Fahrern verstanden, die besonders mit dem Verhalten des Fahrzeugs in transienten Betriebszuständen zusammenhängt.

In der EP 0 846 945 A der Patentanmelderin ist ein Verfahren zur Analyse des Fahrverhaltens von Kraftfahrzeugen beschrieben, bei dem folgende Schritte ausgeführt werden:
- Durchführen von Messungen an einem realen Fahrzeug zur Gewinnung von Meßgrößen über das Fahrverhalten;
- laufende Überprüfung, ob von vorbestimmten Triggerbedingungen, d.h. Konstellationen von bestimmten Meßgrößen, eine erfüllt ist;
- bei Erfüllung der Triggerbedingungen Berechnen mindestens einer Bewertungsgröße, die die Fahrbarkeit des Fahrzeugs ausdrückt, aus einer oder mehrerer Meßgrößen aufgrund einer vorbestimmten Funktion;
- Ausgeben der Bewertungsgröße;

Bei der Bewertungsgröße handelt es sich um eine Variable, die die Qualität des Fahrzeugs in Hinblick auf die Fahrbarkeit repräsentiert. Dabei wird durch ein aufwendiges Berechnungsverfahren und durch Eichung an Versuchspersonen eine möglichst weitgehende Korrelation zwischen der aus den Meßwerten berechneten Bewertungsgröße und der subjektiven Bewertung durch Versuchspersonen hergestellt.

Es ist natürlich, daß die Beurteilung des Fahrverhaltens ein und desselben Kraftfahrzeugs durch verschiedene Versuchspersonen in einem bestimmten Schwankungsbereich unterschiedlich erfolgen wird. Es hat sich jedoch herausgestellt, daß diese Unterschiede neben einer stochastischen Komponente eine gewisse systematische Komponente aufweisen.

In analoger Weise sind die Wunschvorstellungen und Anforderungen unterschiedlicher Fahrer in Bezug auf die Fahrbarkeit eines Fahrzeugs nicht exakt gleich. Dies bedeutet, daß es im allgemeinen nicht möglich ist, die Fahrbarkeit so optimieren, daß sie von jedem Fahrer tatsächlich als optimal empfunden wird. So wird etwa ein komfortorientierter Fahrer Ruckelschwingungen als besonders störend empfinden, während ein sportlich orientierter Fahrer Ruckelschwingungen in bestimmten Betriebszuständen sogar positiv bewerten kann.

Aus der EP 0 304 089 A und aus der DE 37 15 423 A sind Verfahren bzw. Vorrichtungen bekannt, bei denen aufgrund verschiedener Sensorsignale versucht wird, den Typus des jeweiligen Fahrers zu erfassen und in Abhängigkeit von dem erfaßten Typus verschiedene Einstellungen am Motor oder allgemein am Fahrzeug vorzunehmen. Regelungstechnisch betrachtet handelt es sich dabei um Steuerung, bei der aufgrund eines Meßwerts eine Einstellung vorgenommen wird, die jedoch den Meßwert nicht weiter beeinflußt. Die Wirksamkeit solcher Maßnahmen ist naturgemäß begrenzt

Aufgabe der vorliegenden Erfindung ist es, die Analyse des Fahrverhaltens eines Kraftfahrzeuges so verfeinern, daß eine verbesserte Übereinstimmung der berechneten Ergebnisse mit dem subjektiv empfundenen Werten erreicht werden kann. Weiters soll ein Verfahren zur Beeinflussung der Fahrbarkeit angegeben werden, das in größerem Maße unabhängig von dem jeweiligen Fahrer ist.

Es hat sich herausgestellt, daß die systematische Komponente bei der Abweichung der Bewertung der Driveability durch unterschiedliche Versuchspersonen durch eine oder mehrere Variable charakterisiert werden kann. Diese Variable wird grundsätzlich aus der gleichen Datenbasis abgeleitet wie die Driveability, wobei jedoch gegebenenfalls zusätzliche Meßgrößen erfaßt werden. Dabei gelingt es, die Variable mit verbal definierten Fahrertypen in Übereinstimmung zu bringen. Grundsätzlich sind verschiedene Möglichkeiten denkbar, eine oder mehrere Variable aus den gewonnenen Meßgrößen abzuleiten. So ist es beispielsweise möglich, eine Variable zu definieren, die einen Komfort-Sportlichkeits-Index darstellt. Der betreffende Fahrer würde dabei auf einer stetigen Skala zwischen sehr komfortbetont und sehr sportlich beurteilt werden. Alternativ dazu ist es jedoch auch möglich, für Komfort und Sportlichkeit jeweils eine unabhängige Variable zu definieren. Andererseits ist es auch möglich, nur bestimmte diskrete Werte für die Variable zuzulassen, wobei jeder dieser Werte einem bestimmten vordefinierten Fahrertyp entspricht. Verbal könnten solche Typen etwa als vorsichtig, komfortbetont, ungeübt, sportlich, hektisch und dergleichen mehr bezeichnet werden. In weiterer Folge ist es auch möglich, mehrere Verhaltensvariablen zu definieren, und daraus in einem zweiten Schritt eine Klassifikation in unterschiedliche Typen vorzunehmen. Solche Verhaltensvariablen könnten beispielsweise sein: Komfort/Sportlichkeit, Sparsamkeit, Beherrschung des Fahrzeugs und dergleichen. In einem solchen Fall liegt also eine mehrdimensionale Beurteilung vor, d.h., es wird ein Profil des jeweiligen Fahrers aus den verschiedenen Variablen erstellt, die unterschiedliche Eigenschaften bewerten.

Die oben beschriebene verbale Interpretation der Bedeutung der Variablen dient jedoch nur zum besseren Verständnis und zur verbesserten Darstellung des erfindungsgemäßen Verfahrens. Bei der tatsächlichen Durchführung wird mit mathematischen und statistischen Methoden gearbeitet, um die entsprechende Genauigkeit und Reproduzierbarkeit zu gewährleisten.

Der wesentliche Unterschied der vorliegenden Erfindung zu bekannten Verfahren, bei denen ebenfalls eine Fahrererkennung durchgeführt wird, ist der, daß der jeweils erfaßte Fahrertyp in die Berechnung der Driveability eingeht, so daß ein mehrfach verschachtelter Regelkreis entsteht, der eine weitgehend adaptiv-selbstlernende Optimierung des Fahrverhaltens ermöglicht.

Wesentlich an der vorliegenden Erfindung ist, daß die Driveability oder die Fahrbarkeit nicht unabhängig vom jeweiligen Fahrer gesehen wird. Der Fahrer wird dabei in die Berechnung in der Weise einbezogen, daß aus den Meßgrößen Informationen über sein Verhalten gewonnen werden. Beispielsweise zeigt die Häufigkeit und Frequenz der Veränderung der Öffnung der Drosselklappe, ob es sich um einen ruhigen komfortbetonten oder um einen sportlich aggressiven Fahrer handelt. Zur Beurteilung des Fahrertyps können auch Meßgrößen herangezogen werden, die nicht unbedingt direkt in die Driveability eingehen, wie etwa der Lenkwinkel bzw. die Lenkwinkelgeschwindigkeit.

Bereits bei der Eichung des Systems mit Hilfe von Versuchspersonen werden diese klassifiziert und gegebenenfalls einem entsprechenden Fahrertyp zugeordnet bzw. es wird der den Fahrertyp klassifizierenden Variablen ein bestimmter Wert zugeordnet. Diese Zuordnung wird dabei so durchgeführt, daß ein und dasselbe Fahrzeug in der gleichen Einstellung von Fahrern des gleichen Typs möglichst gleich bewertet wird, während es von Fahrern unterschiedlichen Typs unterschiedlich bewertet werden kann.

Bei der Beeinflussung des Fahrverhaltens von Fahrzeugen in Abhängigkeit vom Typ des Fahrers bestehen unterschiedliche Möglichkeiten. Es wird zunächst aufgrund der vom Fahrer gesetzten Aktionen der Typus des Fahrers bestimmt. Aufgrund des so erfaßten Fahrertyps kann in einer ersten Ausführungsvariante der Erfindung eine Veränderung von Einflußgrößen vorgenommen werden. Dies bedeutet, daß Motorkennfelder aus einem Vorrat von mehreren Möglichkeiten so ausgewählt werden, daß das zu erwartende Fahrverhalten dem jeweiligen Fahrertyp optimal entspricht. Dieser Steuerung ist vorzugsweise eine Regelung überlagert, die nachfolgend beschrieben wird.

Bei einer bevorzugten Ausführungsvariante der vorliegenden Erfindung wird laufend eine Abweichung der augenblicklich bestimmten Bewertungsgröße oder mehrerer Bewertungsgrößen von einem oder mehreren Sollwerten bestimmt, wobei die Sollwerte nach vorbestimmten Funktionen aus den gleichzeitig bestimmten Variablen abgeleitet werden, die den Fahrertyp festlegen. Durch an sich bekannte mehrdimensionale Regelungsverfahren, beispielsweise auf der Basis von neuronalen Netzen, wird versucht, diese Sollwertabweichung zu minimieren. Neuronale Netze stellen eine vereinfachte computertaugliche Nachbildung menschlicher Gehirnzellen dar und bestehen aus einer frei wählbaren Anzahl von Eingängen, Ausgängen, Knoten und Knotenverbindungen in verschiedenen Ebenen. Durch ein Trainieren dieses neuronalen Netzes können Knotengewichte bestimmt werden, die es erlauben, die Auswirkung von Änderungen in den Eingangsgrößen auf die Ausgangsgrößen, d.h., die Meßwerte, zu prognostizieren. Bei Vorliegen einer Regelabweichung liegt daher zunächst einmal eine Schätzung vor, in welcher Weise die Eingangsgrößen, also beispielsweise die Auswahl der Motorkennfelder und dergleichen, zu ändern sind, um die Regelabweichung zu verkleinern. Da die inneren Zusammenhänge des Systems nicht vollständig bekannt sind, handelt es sich bei einem solchen Vorgang um einen Iterationsprozeß, der unter Umständen eine Vielzahl von Schritten benötigt, um ein Optimum zu erreichen.

Besonders vorzugsweise wird die oben beschriebene Regelung in zeitlicher Hinsicht gestaffelt ausgeführt. So gibt es etwa Regeleingriffe, die sofort umgesetzt werden, wie etwa, wenn durch das schnelle Niedertreten des Gaspedals erkannt wird, daß der Fahrer augenblicklich maximale Beschleunigung wünscht, um beispielsweise einen Überholvorgang durchzuführen. In diesem Fall werden sofort die entsprechenden Maßnahmen gesetzt, um ohne Rücksicht auf Ruckeln oder dergleichen maximale Leistung zur Verfügung zu stellen. Im Gegensatz dazu wird bei Neubeginn einer Fahrt, also wenn der Fahrer möglicherweise gewechselt hat, die Grundeinstellung des Fahrzeugs dem erfaßten Fahrertyp angepaßt. Um auch Änderungen der Fahrerwünsche während einer Fahrt berücksichtigen zu können, werden - etwa im Minutenbereich - Signifikante des Fahrverhaltens während einer Fahrt erkannt und entsprechende Feinabstimmungen vorgenommen.

Neben diesen oben beschriebenen Anpassungen an den jeweiligen Fahrer können noch zusätzlich langfristige Änderungen des Fahrzeugs selbst durch Verschleiß, Alterung, Defekt und dergleichen, erkannt und ausgeglichen werden. So kann etwa im langfristigen Bereich die Art die Leerlaufregelung geändert werden, falls dies aufgrund von Alterungseinflüssen des Fahrzeugs vorteilhaft ist.

In einer Variante des erfindungsgemäßen Verfahrens kann als ein Teilergebnis auch der Grad der Fahrzeugbeherrschung durch den Fahrer ermittelt werden. Aus verschiedenen Meßwerten, wie etwa den einzelnen Raddrehzahlen, der Querbeschleunigung und dem Drehwinkel über die Hochachse, kann ermittelt werden, inwieweit sich das Fahrzeug in dem Grenzbereich der Kontrollierbarkeit befindet. Andererseits kann, wie oben bereits beschrieben, der Grad der Fahrzeugbeherrschung durch den Fahrer ebenfalls aus den Meßwerten abgeleitet werden. Indem man nun diese beiden Informationen in Beziehung zueinander setzt, kann der Index abgeleitet werden, der angibt, in wie weit der Fahrer in seinem persönlichen Grenzbereich vorgedrungen ist. Dieser Index kann beispielsweise so aufgebaut sein, daß ein Wert von 100% aussagt, daß sich der Fahrer augenblicklich an der äußersten Grenze der sicheren Fahrzeugbeherrschung befindet. Bei Werten von über 100% ist damit zu rechnen, daß der Fahrer die Beherrschung über das Fahrzeug verlieren wird. Umgekehrt kann ein bestimmter Maximalwert von beispielsweise 90% definiert werden, bei dem im allgemeinen ein ausreichender Sicherheitsabstand zu kritischen Situationen besteht. Insbesonders kann die Größe angezeigt werden, um den Fahrer vor kritischen Situationen zu warnen. Besonders vorteilhaft ist dabei, daß der erfahrene und das Fahrzeug gut beherrschende Fahrer durch diese Warnung vor kritischen Situationen erst deutlich später gewarnt wird als der unerfahrene Fahrer. Auf diese Weise ist eine wesentlich gezieltere Warnung in Abhängigkeit vom Fahrkönnen möglich.

Aber auch im Automobilrennsport bringt es große Vorteile, eine objektive Bewertungsgröße zu haben, die eine Aussage über den Grenzbereich des Fahrzeugs macht. Die Anzeige eines solchen Wertes ist nicht nur eine wertvolle Rückmeldung für den Fahrer oder das betreffende Team, sondern kann auch für die Zuseher eines Rennens interessant sein. Zu diesem Zweck werden die entsprechenden Daten an eine zentrale Überwachungsstelle übermittelt.

Weiters betrifft die vorliegende Erfindung eine Vorrichtung zur Analyse des Fahrverhaltens von Kraftfahrzeugen, sowie eine Vorrichtung zur Beeinflussung des Fahrverhaltens von Kraftfahrzeugen. In diesen Vorrichtungen laufen die oben beschriebenen Verfahren ab.

In der Folge wird die Erfindung anhand der in den Figuren dargestellten Ausführungsbeispiele näher erläutert.
Die Fig. 1 zeigt ein Blockdiagramm einer erfindungsgemäßen Schaltung zur Analyse des Fahrverhaltens,
die Fig. 2 ein Flußdiagramm, das den Steuerungsablauf der Schaltung von Fig. 1 zeigt,
die Fig. 3 zeigt ein Blockdiagramm einer Schaltung zur Beeinflussung des Fahrverhaltens,
und die Fig. 4 ein Flußdiagramm der Arbeitsweise der Schaltung des Blockdiagramms von Fig. 3.

Mehrere Sensoren S1, S2, S3 erfassen Meßwerte, die den augenblicklichen Zustand des Fahrzeugs wiedergeben. Ein Teil dieser Meßwerte betrifft den Fahrzustand, wie etwa Längsbeschleunigung, Querbeschleunigung, Motortemperatur und dergleichen, während ein anderer Teil der Meßwerte Größen betrifft, die vom Fahrer direkt beeinflußt werden, wie etwa Gaspedalstellung (Stellung der Drosselklappe), Lenkwinkel, Lenkwinkelgeschwindigkeit oder auch Sitzstellung. Die periodisch gewonnenen Meßwerte werden in einem Meßwertspeicher M-SP abgelegt. In einer Erkennungseinheit TB wird aufgrund der Meßwerte zu jedem Zeitpunkt die Entscheidung getroffen, ob eine sogenannte Triggerbedingung vorliegt. Triggerbedingungen sind vordefinierte Fahrzustände, die dadurch definiert sind, daß die Meßwerte bestimmte Bedingungen erfüllen. Eine dieser Triggerbedingungen könnte beispielsweise mit "Leerlauf" bezeichnet werden, wobei die Bedingungen für das Vorliegen von Leerlauf sein können: Unterschreiten einer bestimmten Motordrehzahl, vollständig oder fast vollständig geschlossene Drosselklappe und kein Gang eingelegt oder ausgekuppelter Zustand. Bei Vorliegen einer Triggerbedingung werden in einer Auswerteeinheit aus den Meßgrößen einige vorbestimmte Funktionen berechnet. Diese Funktionen werden auch Kriterien genannt, wobei in die Berechnung dieser Kriterien nicht nur die Meßwerte zum Zeitpunkt des Erfüllens der Triggerbedingung eingehen, sondern auch die Meßwerte in einem bestimmten zeitlichen Bereich vor und nach dem Zeitpunkt der Erfüllung der Triggerbedingung. Wenn beispielsweise die Triggerbedingung "Leerlauf' erkannt wird, so können ein oder mehrere Kriterien berechnet werden, die die Art und das Ausmaß der Ruckelschwingungen betreffen, die in diesem Zeitraum vorliegen. Um die Auswertung zu verfeinern, können die aufgrund der Triggerbedingungen definierten Betriebszustände noch weiter unterteilt werden. So kann etwa der Betriebszustand Leerlauf in folgende Detailbetriebszustände unterteilt werden: Leerlauf nach dem Start, Leerlauf nach Lastwechsel, Leerlauf nach dem Zu- oder Wegschalten der Klimaanlage, Leerlauf während des Lenkens, Leerlauf während des Bremsens, usw.

Während eines 15minütigen Fahrzyklus können so beispielsweise etwa 1000 Mal Triggerbedingungen erfaßt werden und aufgrund der vorgegebenen Funktionen die Werte für die entsprechenden Kriterien berechnet werden. Gleichartige Kriterien werden entsprechend gemittelt, um zu einer statistisch signifikanten Aussage zu kommen. In einer ersten Aggregationseinheit AGG1 wird aus der Vielzahl von Funktionswerten eine beschränkte Anzahl von beispielsweise 15 Einzelbewertungsgrößen ermittelt. Diese Bewertungsgrößen können etwa den Komfort, das Ansprechverhalten, Ruckelverhalten, Kaltstartverhalten oder dergleichen betreffen. In einer zweiten Aggregationseinheit AGG2 wird aufgrund eines vorgegebenen Algorithmus aus den Einzelbewertungsgrößen eine Gesamtbewertungsgröße berechnet.

Soweit dies bis hierher beschrieben ist, entspricht die Schaltung einer Lösung, wie sie in der EP 0 846 945 A beschrieben ist. Bezüglich der Details der Schaltung wird auf diese veröffentlichte Druckschrift verwiesen. Bei der erfindungsgemäßen Lösung wird jedoch zusätzlich dazu aus den Meßwerten in einer ersten Fahreranalyseeinheit F1 eine Gruppe von Variablen berechnet, die bestimmte Eigenschaften des betreffenden Fahrers ausdrücken, wie etwa Sportlichkeit, Fahrtüchtigkeit und dergleichen. Aus diesem Profil von Fahrereigenschaften wird in einer zweiten Fahreranalyseeinheit F2 der Fahrer einem Typ aus einer Anzahl von vorbestimmten Typen zugeordnet. Wesentlich an der vorliegenden Erfindung ist nunmehr, daß der Fahrertyp, der in F2 bestimmt wird, in die Berechnung eingeht, die in den Aggregationseinheiten AGG1 und AGG2 durchgeführt wird. Zusätzlich dazu kann auch schon aus der ersten Fahreranalyseeinheit F1 eine Beeinflussung der Berechnung in den Aggregationseinheiten AGG1 und AGG2 durchgeführt werden. Die Beeinflussung erfolgt erfindungsgemäß dabei in der Weise, daß die Gewichtung der Einzelbewertungen bei der Berechnung einer Gesamtbewertung entsprechend dem Fahrertyp verändert wird. Es ist jedoch auch möglich, in Abhängigkeit vom Fahrertyp einzelne Kriterien aus der Berechnung vollkommen auszuklammern. So könnte beispielsweise dann, wenn ein besonders sportlicher Fahrer festgestellt wird, ein Ruckeln unterhalb einer gewissen Störschwelle als irrelevant für die Beurteilung der Fahrbarkeit betrachtet werden.

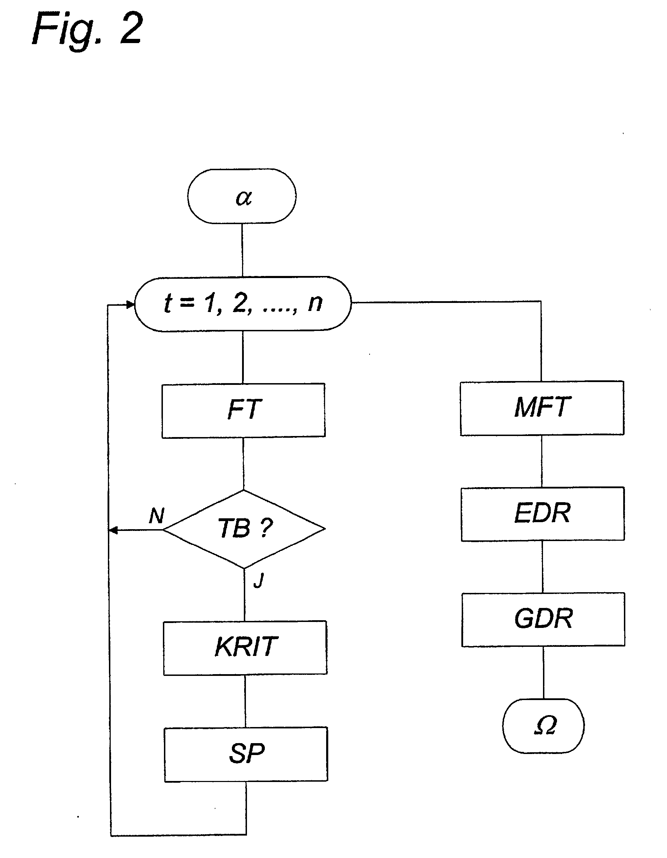

In der Fig. 2 ist der Ablauf der Analyse in einem Flußdiagramm dargestellt.

Bei der Analyse wird periodisch in einem Abstand von einigen Millisekunden immer wiederkehrend der gleiche Berechnungszyklus ausgeführt. Die zu einem Zeitpunkt t gewonnen Meßwerte werden in eine vorbestimmte Funktion eingesetzt, um den Fahrertyp zu bestimmen. Diese Funktion wird mit Hilfe von statistischen Verfahren aus Untersuchungen abgeleitet, die an einer Vielzahl von Versuchspersonen durchgeführt worden sind, um ihr Fahrverhalten zu prüfen. Weiters werden die Daten in der Einheit TB auf das Vorliegen einer Triggerbedingung untersucht. Wird dabei festgestellt, daß keine Triggerbedingung vorliegt, springt der Programmablauf wieder zum Beginn des Zyklus zurück. Liegt eine Triggerbedingung vor, so wird in der Recheneinheit KRIT aufgrund von vorbestimmten Funktionen ein Vektor berechnet, der sich aus den einzelnen Kriterien zusammensetzt, die den Wert von Einzelbewertungsgrößen zu einem ganz bestimmten Zeitpunkt darstellen. In einem Speicher SP wird dieser Vektor gespeichert. Dann kehrt der Ablauf wieder am Beginn des Zyklus zurück.

Nach Ablauf eines vorbestimmten Zeitraums oder nach Beendigung der Fahrt werden die gespeicherten Werte statistisch aufbereitet. Dabei werden beispielsweise gleichartige Zustände betreffende Werte gemittelt, um Meßfehler auszugleichen. In der Einheit MFT wird ein gemittelter Fahrertyp berechnet und in der Einheit EDR werden die Kriterien gemittelt und verarbeitet, um zu den Einzelbewertungsgrößen zu kommen. Die Einzelbewertungsgrößen sind auch verbal definiert, wie Startverhalten, Leerlauf, Qualität und dergleichen, um einen Vergleich mit den subjektiven Empfindungen von Versuchspersonen zu ermöglichen. In der Berechnungseinheit GDR werden die Einzelbewertungsgrößen zu einer Gesamtbewertungsgröße zusammengefaßt, die als einzelne Variable eine Gesamtbewertung des Fahrverhaltens darstellt. Bei dieser Berechnung werden vorbestimmte Funktionen verwendet, die vom Fahrertyp abhängen. Dadurch wird beispielsweise dem Umstand Rechnung getragen, daß ein sportlicher Fahrer ein bestimmtes Fahrzeug anders empfindet als ein vorsichtiger oder komfortbetonter Fahrer.

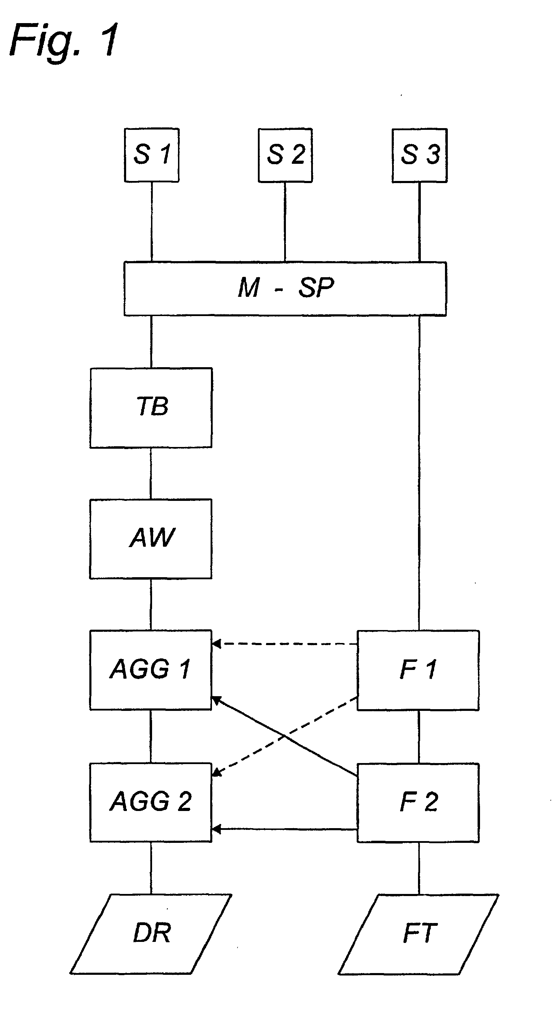

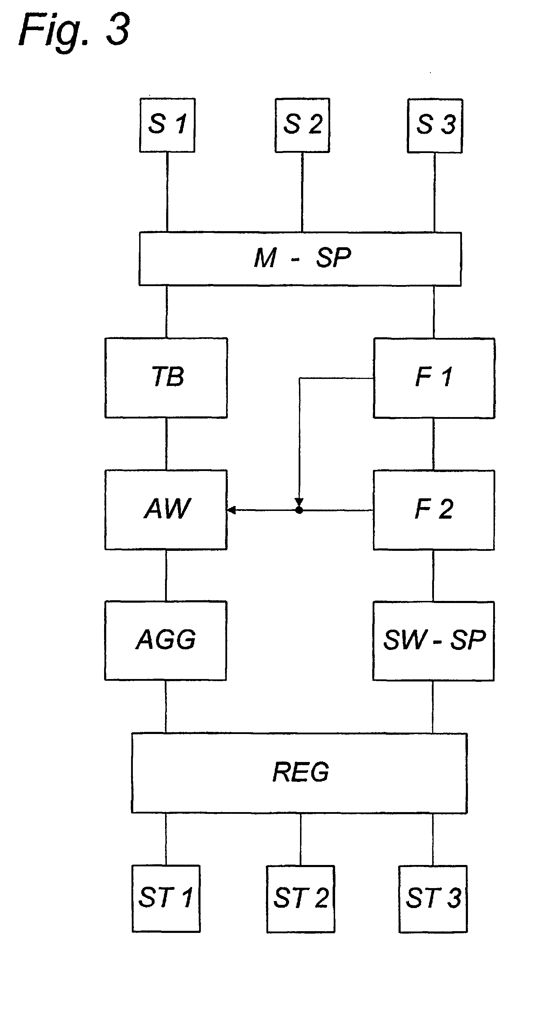

Die Variante von Fig. 3 entspricht in Teilbereichen der von Fig. 1. In der Folge werden vorallem die Unterschiede diskutiert. In Abhängigkeit von dem erfaßten Fahrertyp wird aus einem entsprechenden Speicher SW-SP ein Sollprofil aufgerufen, das die von einem gewünschten Fahrertyp gewünschten Einzelbewertungsgrößen umfaßt. Dieses Sollprofil wird aufgrund einer statistischen Auswertung der Befragung einer Vielzahl von Versuchspersonen in Zusammenhang mit durchgeführten Testfahrten gewonnen. In diesem Zusammenhang ist anzumerken, daß dies nicht unbedingt bedeutet, daß für eine bestimmte Einzelbewertungsgröße nur ein bestimmter Wert als optimal angesehen wird. Es kann auch ein Wertebereich vorgegeben sein oder ein Maximierungskriterium in der Form: "So groß als möglich". Das in der Aggregationseinheit AGG ermittelte Istprofil wird in einer Regeleinrichtung REG mit dem Sollprofil verglichen, und es werden entsprechend einem vorgegebenen Regelalgorithmus Regelungsgrößen an entsprechende Stellglieder ST1, ST2, ST3 ausgegeben, die beispielsweise die Motorkennfelder beeinflussen. Auf diese Weise ist es möglich, das aus den Einzelbewertungsgrößen bestehende Fahrbarkeitsprofil nahe an ein dem jeweiligen Fahrertyp angepaßtes Sollprofil heranzuführen.

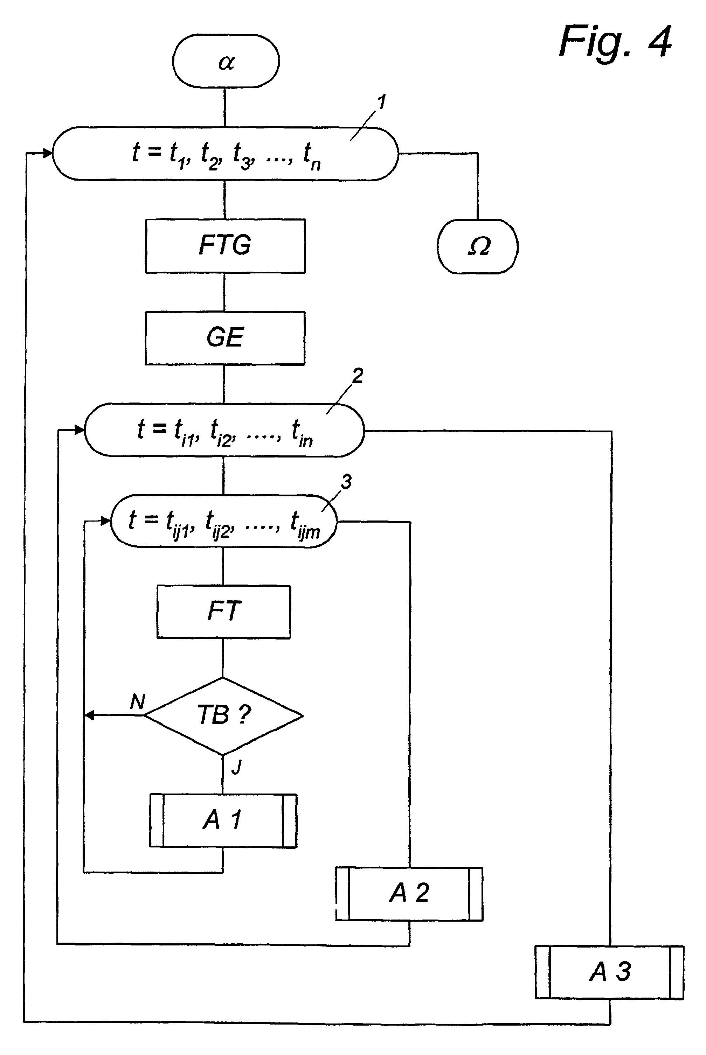

In der Fig. 4 ist der Ablauf des Regelalgorithmus in großen Zügen wiedergegeben. Eine erste Schleife 1 wird in relativ großen Zeitabständen zu Zeitpunkten t₁, t₂, t₃ durchlaufen, und jeweils bei Antrieb einer Fahrt neu gestartet. Zunächst wird in einer Einheit FTG der grundsätzliche Fahrertyp bestimmt. Dabei können auch Informationen verarbeitet werden, die nicht direkt mit der Fahrbarkeit zusammenhängen. So kann beispielsweise das System aus der genauen Sitzeinstellung, die widerlegbare Hypothese aufstellen, daß ein ganz bestimmter bereits in einem Speicher verhaltensmäßig abgebildeter Fahrer eine neue Fahrt beginnt. In der Einheit GE wird in Abhängigkeit von diesem Fahrertyp eine Grundeinstellung vorgenommen. Danach ist eine weitere Zeitschleife 2 vorgesehen, die zu Zeitpunkten tᵢ₁, tᵢ₂ in Abständen von einigen Minuten durchlaufen wird. Innerhalb dieser Schleife ist eine weitere Schleife vorgesehen zu den Zeitpunkten tᵢⱼ₁, tᵢⱼ₂, usw. durchlaufen wird, wobei die Zeitabstände im Millisekundenbereich liegen. Wie oben beschrieben, wird einerseits in der Einheit FT eine Fahrertyperkennung durchgeführt und andererseits aus den Meßwerten das Vorliegen einer Triggerbedingung geprüft. Liegt keine Triggerbedingung vor, so kehrt der Ablauf zu der innersten Schleife 3 zurück. Wird jedoch eine Triggerbedingung erfaßt, so wird ein Regelprogramm Al aufgerufen. In diesem Regelprogramm werden die in diesem Flußdiagramm nicht dargestellten Speicher vorliegenden Soll- und Istwerte des Fahrverhaltens miteinander verglichen, und es werden aufgrund der Regelabweichung Signale an entsprechende Stellglieder ausgegeben, um die Regelabweichung zu verringern. In dem Regelprogramm Al werden jedoch nur solche Stellglieder beeinflußt, bei denen eine sofortige Anpassung aufgrund des augenblicklichen Betriebszustandes und des augenblicklichen Fahrwunsches notwendig ist. So werden beispielsweise nach einem schnellen und vollständigen Niederdrücken des Gaspedals die entsprechenden Motorkennfelder sofort in der Weise beeinflußt, daß maximale Motorleistung vorliegt.

Wenn die innerste Schleife 3 eine vorbestimmte Anzahl von Malen durchlaufen worden ist und der Zeitpunkt tᵢⱼₘ vorliegt, wird das Regelprogramm A2 durchgeführt. Dabei werden Änderungen des Fahrwunsches ein und desselben Fahrers berücksichtigt, die sich während der Fahrt ergeben. Dies kann beispielsweise durch einen Wechsel von einer Überlandfahrt zu einer Fahrt innerhalb des Stadtgebiets bedingt sein. Es kann aber auch ein ansonsten komfortorientierter Fahrer in Eile geraten oder umgekehrt ein ansonsten sportlicher Fahrer geruhsam fahren. In dem Regelprogramm A2 wird diese Feinabstimmung in einem zeitlichen Abstand von einigen Minuten durchgeführt.

Wenn zu einem Zeitpunkt tᵢₙ die zweite Schleife 2 eine vorbestimmte Anzahl von Malen durchlaufen worden ist, wird in einem Regelprogramm A3 die grundsätzliche Einstellung überprüft.

Zusätzlich zu der oben beschriebenen Regelungsstrategie, die vom erfaßten Fahrertyp abhängt, kann in grundsätzlich der gleichen Weise eine weitere Optimierung der Fahrbarkeit vorgenommen werden. In analoger Weise ist es nämlich möglich, aus den erfaßten Meßwerten Rückschlüsse auf Änderungen des Fahrzeugs selbst im Zeitablauf zu ziehen. Dabei kann es sich um Verschleißerscheinungen handeln, die die Fahrbarkeit beeinflussen, oder auch um Defekte, die das Fahrverhalten verschlechtern. Bei einer optimalen Auslegung einer Optimierung des Fahrverhaltens werden solche alterungs- oder verschleißbedingte Änderungen des Fahrzeugs an sich automatisch kompensiert. Es ist jedoch im Sinne der Erfindung auch möglich, diese Änderungen in einer eigenen Berechnungseinheit vorab zu berücksichtigen und auszugleichen.

Die vorliegende Erfindung ermöglicht es, das Fahrverhalten von Kraftfahrzeugen unter Berücksichtigung des jeweiligen Fahrertyps nicht nur besser zu beurteilen, sondern auch eine optimale Anpassung des Fahrverhaltens eines Fahrzeugs an einen bestimmten Fahrertyp durchzuführen.

## Patentansprüche

1. Verfahren zur Analyse des Fahrverhaltens von Kraftfahrzeugen, mit folgenden Schritten:
- Durchführen von Messungen an einem realen Fahrzeug zur Gewinnung von Meßgrößen über das Fahrverhalten;
- laufende Überprüfung, ob von vorbestimmten Triggerbedingungen, d.h. Konstellationen von bestimmten Meßgrößen, eine erfüllt ist;
- bei Erfüllung der Triggerbedingung Berechnen mindestens einer Bewertungsgröße, die die Fahrbarkeit des Fahrzeugs ausdrückt, aus einer oder mehrerer Meßgrößen aufgrund einer vorbestimmten Funktion;
- Ausgeben der Bewertungsgröße;
**dadurch gekennzeichnet, daß** aus den Meßgrößen mindestens eine Variable abgeleitet wird, die den Typus des Fahrers des betreffenden Kraftfahrzeugs repräsentiert und daß bei der Berechnung der Bewertungsgröße Gewichtungsfaktoren verwendet werden, die von der den Typus des Fahrers repräsentierenden Variablen abhängen.

2. Verfahren nach Anspruch 1, **dadurch gekennzeichnet, daß** aus den Meßgrößen mehrere Variable abgeleitet werden, die den Typus des Fahrers des betreffenden Kraftfahrzeugs repräsentieren und daß aufgrund der Werte der Variablen der Fahrer einem Typ aus einer Gruppe von vorbestimmten Typen zugeordnet wird.

3. Verfahren zur Beeinflussung des Fahrverhaltens von Kraftfahrzeugen, mit folgenden Schritten:
- Durchführen von Messungen an einem realen Fahrzeug zur Gewinnung von Meßgrößen über das Fahrverhalten;
- laufende Überprüfung, ob von vorbestimmten Triggerbedingungen, d.h. Konstellationen von bestimmten Meßgrößen, eine erfüllt ist;
- bei Erfüllung der Triggerbedingung Berechnen eines Profils aus mehreren Bewertungsgrößen, die die Fahrbarkeit des Fahrzeugs ausdrücken, aus einer oder mehrerer Meßgrößen aufgrund von vorbestimmten Funktionen;
**dadurch gekennzeichnet, daß** aus den Meßgrößen mindestens eine Variable abgeleitet wird, die den Typus des Fahrers des betreffenden Kraftfahrzeugs repräsentiert und daß in Abhängigkeit von dem Wert der Variablen mindestens eine Einstellgröße, die das Fahrverhalten des Fahrzeugs beeinflußt, auf einen Wert festgesetzt wird, so daß das Profil aus den mehreren Bewertungsgrößen einem vorbestimmten Profil möglichst nahekommt, das von der den Typus des Fahrers repräsentierenden Variablen abhängt.

4. Verfahren nach Anspruch 3, **dadurch gekennzeichnet, daß** aus den mehreren Bewertungsgrößen eine Gesamtbewertungsgröße berechnet wird, wobei die den Typus des Fahrers repräsentierende Variable in die Berechnung eingeht, und daß durch Veränderung der mindestens einen Einstellgröße eine Maximierung der Gesamtbewertungsgröße durchgeführt wird.

5. Verfahren nach einem der Ansprüche 3 oder 4, **dadurch gekennzeichnet, daß** die Änderung mehrerer Einstellgrößen in unterscheidlichen Zeitabständen durchgeführt wird.

6. Verfahren nach einem der Ansprüche 1 bis 5, **dadurch gekennzeichnet, daß** aus den Meßgrößen eine Variable abgeleitet wird, die den Grad der Fahrzeugbeherrschung **durch** den Fahrer repräsentiert.

7. Verfahren nach einem der Ansprüche 1 bis 6, **dadurch gekennzeichnet, daß** die mindestens eine Bewertungsgröße und gegebenenfalls Meßgrößen an eine vom Fahrzeug getrennte Überwachungsstelle übermittelt werden.

8. Vorrichtung zur Analyse des Fahrverhaltens von Kraftfahrzeugen mit einem Meßsystem mit Sensoren zur Erfassung von Meßgrößen, die für die Fahrbarkeit relevant sind, und mit einer Berechnungseinheit, um aus den erfaßten Meßgrößen mindestens eine Bewertungsgröße abzuleiten, die die Fahrbarkeit des Fahrzeugs repräsentiert, **dadurch gekennzeichnet, daß** eine Einheit zur Erfassung des Fahrertyps vorgesehen ist, die mit der Berechnungseinheit in Verbindung steht.

9. Vorrichtung zur Beeinflussung des Fahrverhaltens von Kraftfahrzeugen mit einem Meßsystem mit Sensoren zur Erfassung von Meßgrößen, die für die Fahrbarkeit relevant sind, und mit einer Berechnungseinheit, um aus den erfaßten Meßgrößen mindestens eine Bewertungsgröße abzuleiten, die die Fahrbarkeit des Fahrzeugs repräsentiert, **dadurch gekennzeichnet, daß** eine Einrichtung zur Erfassung des Fahrertyps vorgesehen ist, und daß weiters eine Regeleinrichtung vorgesehen ist, die die Bewertungsgrößen auf Sollwerte regelt, die von dem erfaßten Fahrertyp abhängen.

10. Vorrichtung nach einem der Ansprüche 8 oder 9, **dadurch gekennzeichnet, daß** weiters eine Einrichtung zur Berechnung einer Variablen vorgesehen ist, die den augenblicklichen Grad der Fahrzeugbeherrschung des Fahrers repräsentiert.

11. Vorrichtung nach einem der Ansprüche 8 bis 10, **dadurch gekennzeichnet, daß** weiters eine Übertragungseinheit zur Übermittlung von Daten an eine vom Fahrzeug getrennte Überwachungsstelle vorgesehen ist.

## Claims

1. A procedure for analyzing the driveability of motor vehicles, including the following steps:
- Conducting tests on a real vehicle to obtain measurement variables describing its driveability;
- Continuous monitoring to check whether one of a number of predefined trigger conditions is fulfilled, i.e., whether a certain set of variables takes on certain values;
- If the trigger condition is fulfilled, computation of at least one rating representing vehicle driveability from one or more measured values, using a predefined functional relationship;
- Output of the rating;
**characterized in that** at least one variable representing the type of driver of the vehicle concerned is derived from the measurement values, and wherein weighting factors are used in computing the rating, which depend on the variable representing the type of driver.

2. A procedure as claimed in Claim 1, **characterized in that** several variables representing the type of driver of the vehicle concerned are derived from the measurement values, and wherein the driver is assigned to one of a group of predetermined types, in dependence of the values of these variables.

3. A procedure for influencing the driveability of motor vehicles, including the following steps:
- Conducting tests on a real vehicle to obtain measurement variables describing its driveability;
- Continuous monitoring to check whether one of a number of predefined trigger conditions is fulfilled, i.e., whether a certain set of variables takes on certain values;
- If the trigger condition is fulfilled, computation of a profile of several ratings representing vehicle driveability from one or more measured values, using predefined functional relationships;
**characterized in that** at least one variable representing the type of driver of the vehicle concerned is derived from the measurement values, and wherein the value of at least one control variable influencing vehicle driveability is determined in dependence of the value of the driver-related variable, such that the profile of the several ratings closely approaches a predetermined profile depending on the variable representing the type of driver.

4. A procedure as claimed in Claim 3, **characterized in that** an overall rating is computed from the several ratings, the variable representing the type of driver entering the computation, and wherein a maximization of the overall rating is effected by a change in the at least one control variable.

5. A procedure as claimed in any of Claims 3 or 4, **characterized in that** changes in several control variables are effected at different intervals of time.

6. A procedure as claimed in any of Claims 1 to 5, **characterized in that** a variable representing the degree of a driver's driving skill is derived from the measured values.

7. A procedure as claimed in any of Claims 1 to 6, **characterized in that** the at least one rating and, if required, measured values are transmitted to a monitoring unit independent of the vehicle.

8. A device for analyzing the driveability of motor vehicles comprising a measuring system with sensors for picking up driveability-relevant measurement values and a computation unit for deriving at least one rating representing vehicle driveability from the obtained measurement values, **characterized in that** a unit for determination of the type of driver is provided, which is connected to the computation unit.

9. A device for influencing the driveability of motor vehicles comprising a measuring system with sensors for picking up driveability-relevant measurement values and a computation unit for deriving at least one rating representing vehicle driveability from the obtained measurement values, **characterized in that** a unit for determination of the type of driver is provided in addition to a control unit adjusting the ratings to target values depending on the type of driver determined.

10. A device as claimed in any of Claims 8 or 9, **characterized in that** a unit is provided for computation of a variable representing the momentary degree of a driver's driving skill.

11. A device as claimed in any of Claims 8 to 10, **characterized in that** a transmission unit is provided for the transmission of data to a monitoring unit independent of the vehicle.

## Revendications

1. Procédé pour analyser le comportement dynamique de véhicules automobiles présentant les étapes suivantes :
- exécution de mesures sur un véhicule réel, pour recueillir des grandeurs mesurées concernant son comportement dynamique,
- examen courant pour déterminer si parmi des conditions de déclenchement définies à l'avance, c'est-à-dire des constellations de grandeurs mesurées définies, une condition est remplie,
- si la condition de déclenchement est remplie, calcul d'au moins une grandeur d'évaluation exprimant la capacité dynamique du véhicule, à partir d'une ou plusieurs grandeurs mesurées sur la base d'une fonction prédéfinie,
- sortie de la grandeur d'évaluation,
**caractérisé en ce qu'**
à partir des grandeurs mesurées est déduite au moins une variable représentant le type de conducteur du véhicule concerné et, dans le calcul de la grandeur d'évaluation, on utilise des facteurs de pondération qui dépendent des variables représentant le type du conducteur.

2. Procédé selon la revendication 1,
**caractérisé en ce que**
des grandeurs mesurées on déduit plusieurs variables représentant le type du conducteur du véhicule concerné et à partir des valeurs de ces variables, on associe le conducteur à un type faisant partie d'un groupe de types prédéfinis.

3. Procédé pour influencer le comportement du conducteur de véhicules automobiles, présentant les étapes suivantes :
- exécution de mesures sur un véhicule réel, pour recueillir des grandeurs mesurées concernant son comportement dynamique,
- examen continu pour déterminer si parmi des conditions de déclenchement définies à l'avance, c'est-à-dire des constellations de grandeurs mesurées définies, une condition est remplie,
- si la condition de déclenchement est remplie, calcul d'au moins une grandeur d'évaluation exprimant la capacité dynamique du véhicule, à partir d'une ou plusieurs grandeurs mesurées sur la base d'une fonction prédéfinie,
**caractérisé en ce qu'**
à partir des grandeurs mesurées est déduite au moins une variable représentant le type du conducteur de véhicule concerné et qu'en fonction de la valeur des variables au moins une grandeur de réglage ayant de l'influence sur le comportement du conducteur est fixée à une valeur de manière que le profil résultant de différentes grandeurs d'évaluation se rapproche le plus possible d'un profil prédéfini qui dépend des variables représentant le type de conducteur.

4. Procédé selon la revendication 4,
**caractérisé en ce qu'**
à partir des différentes grandeurs d'évaluation on calcule une grandeur d'évaluation globale, la variable représentant le type du conducteur intervenant dans le calcul, et en faisant varier le ou les grandeurs de réglage on maximalise la grandeur d'évaluation globale.

5. Procédé selon l'une quelconque des revendications 3 ou 4,
**caractérisé en ce que**
la variation de plusieurs grandeurs de réglage est effectuée à des intervalles de temps différents.

6. Procédé selon l'une quelconque des revendications 1 à 5,
**caractérisé en ce que**
des grandeurs mesurées est déduite une variable qui représente le niveau de la maîtrise qu'exerce le conducteur sur le véhicule.

7. Procédé selon l'une quelconque des revendications 1 à 6,
**caractérisé en ce que**
la ou les valeurs d'estimation et éventuellement des grandeurs mesurées son établies en un lieu de surveillance séparé du véhicule.

8. Dispositif pour analyser le comportement dynamique de véhicules automobiles comprenant un système de mesure comprenant des détecteurs pour saisir des grandeurs mesurées intéressant la capacité dynamique et une unité de calcul pour déduire des grandeurs mesurées saisies au moins une grandeur d'évaluation qui représente la capacité dynamique du véhicule,
**caractérisé en ce qu'**
une unité prévue, pour détecter le type de conducteur est en relation avec l'unité de calcul.

9. Dispositif pour influencer le comportement dynamique de véhicules automobiles, comprenant un système de mesure comportant des détecteurs pour saisir des grandeurs mesurées intéressant la capacité dynamique et une unité de calcul pour déduire des grandeurs mesurées saisies au moins une grandeur d'évaluation qui représente la capacité dynamique du véhicule,
**caractérisé en ce qu'**
prévu un dispositif pour détecter le comportement dynamique du véhicule et également un dispositif de régulation qui règle les grandeurs d'évaluation à des valeurs de consigne dépendant du type de conducteur qui a été détecté.

10. Dispositif selon l'une quelconque des revendications 8 ou 9,
**caractérisé en ce qu'**
il est prévu de plus un dispositif pur calculer une variable représentant le niveau, à l'instant présent, de la maîtrise exercée par le type de conducteur sur le véhicule.

11. Dispositif selon l'une quelconque des revendications 8 à 10
**caractérisé en ce qu'**
il est prévu de plus une unité de transmission pour transférer des données en un lieu de surveillance séparé du véhicule.
